# EUROPÄISCHE PATENTANMELDUNG

(11) **EP 1 217 814 A2**
(43) Veröffentlichungstag der Anmeldung: **26.06.2002**
(21) Anmeldenummer: 01440402.4
(22) Anmeldetag: 28.11.2001
(51) Int. Cl.: H04M 3/493, H04M 7/00

(54) **Verfahren zum Aufbau einer Telekommunikationsverbindung, sowie Diensterechner und Programmmodule hierfür**

(30) Priorität: 23.12.2000 DE 10064999
(71) Anmelder: ALCATEL, 75008 Paris (FR)
(72) Erfinder: Shen, Yuzhong, 70499 Stuttgart (DE); Lauff, Uwe, 71277 Rutesheim (DE); Böhrer, Jens, 90607 Ruckersdorf (DE); Ryll, Thomas, 10823 Berlin (DE); Gutmann, Ralph, D-70176 Stuttgart (DE)
(74) Vertreter: Brose, Gerhard

(57) **Zusammenfassung**

Die Erfindung betrifft ein Verfahren zum Aufbau einer Telekommunikationsverbindung zwischen einem ersten Teilnehmer (SA) und einem zweiten Teilnehmer (SB) eines Telekommunikationsnetzes (TN), wobei mindestens der erste Teilnehmer (SA) ein Internet-Endgerät (ITA) aufweist, mit den Schritten:
- Der erste Teilnehmer (SA) sendet von seinem Internet-Endgerät (ITA) an einen ersten Diensterechner (WS) zur Durchführung von Diensten für Internetbenutzer eine Information, dass er eine Telekommunikationsverbindung mit dem zweiten Teilnehmer (SB) wünscht,
- der erste Diensterechner (WS) sendet eine Nachricht an einen zweiten Diensterechner (SCP) zur Durchführung von Diensten in einem Telekommunikationsnetz (TN),welche die Rufnummern der genannten Teilnehmer (SA, SB) und die Aufforderung zur Herstellung einer (Telekommunikations-) Verbindung zwischen den genannten Teilnehmern (SA, SB) enthält,
- der zweite Diensterechner (SCP) veranlasst im Telekommunikationsnetz (TN) einen Verbindungsaufbau zwischen dem genannten Teilnehmern (SA, SB),
sowie einen Diensterechner (WS) zur Durchführung von Diensten für Internetbenutzer, einen Diensterechner (SCP) zur Durchführung von Diensten in einem Telekommunikationsnetz (TN) und Programmmodule zum Ablauf in den genannten Diensterechnern.

## Beschreibung

Die Erfindung betrifft ein Verfahren zum Aufbau einer Telekommunikationsverbindung, einen Diensterechner zur Durchführung von Diensten für Internetbenutzer und einen Diensterechner zur Durchführung von Diensten in einem Telekommunikationsnetz, sowie Programmmodule hierfür.

Ein (Fernsprech-) Teilnehmer kann zur Suche der Rufnummer eines weiteren Teilnehmers einen traditionellen Telefonauskunftsdienst benutzen. Dazu muss er zunächst die Rufnummer des Auskunftsdienstes wählen. Er wird dann, in der Regel nach einer Wartezeit, mit einem Mitarbeiter des Auskunftsdienstes verbunden. Diesem übermittelt er dann bestimmte Kriterien zur Identifikation des Teilnehmers, mindestens seinen Zunamen und seinen Wohnort. Der Mitarbeiter gibt diese Suchkriterien dann in einen Rechner ein. Der Teilnehmer muß, jeweils auf Anfrage des Mitarbeiters, zusätzliche oder geänderte Kriterien nennen, bis der gesuchte Teilnehmer identifiziert werden kann. Die Rufnummer(n) des gefundenen Teilnehmers wird (werden) dem suchenden Teilnehmer dann verbal mitgeteilt, häufig automatisch mittels einer Einrichtung mit Mitteln zur Sprachsynthese.

Ein weiterer intern vorgeschlagener Dienst zur Rufnummersuche, bei dem zusätzlich ein an eine Suche anschließender automatischer Aufbau einer (Telekommunikations- oder Fernsprech-) Verbindung angeboten wird, lässt sich durch ein dem Fernsprechnetz überlagertes sogenanntes intelligentes Netz (IN) realisieren. Zur Aktivierung des genannten Dienstes wird ein Diensterechner des Intelligenten Netzes (IN) angerufen, der Mittel zur Sprachanalyse aufweist. Ähnlich wie bei dem eingangs beschriebenen Telefonauskunftsdienst findet ein Dialog zwischen diesem Diensterechner und dem anrufendem Teilnehmer statt, bis der gesuchte Teilnehmer identifiziert werden kann. Der entsprechende Verbindungsaufbau kann anschließend, auf Wunsch, automatisch eingeleitet werden, indem die Rufnummer des suchenden Teilnehmers und des gesuchten Teilnehmers an eine Netzeinrichtung des Fernsprechnetzes zum Verbindungsaufbau übergeben wird. Ein Nachteil dieses Dienstes ist die von vielen Teilnehmern als wenig komfortabel empfundene verbale Kommunikation zwischen Mensch und Maschine, die sich durch die naturgemäß eingeschränkte Flexibilität der Dialogführung ergibt. Außerdem kann es, je nach Aussprache oder Mundart des Teilnehmers, zu Verständnisproblemen oder Mißverständnissen bei der Sprachanalyse kommen, insbesondere wenn die Aussprache des Namens des gesuchten Teilnehmers nicht genau bekannt und/oder schwierig ist.

Weitere, dem Stand der Technik gemäße Dienste zur komfortablen Rufnummernermittlung stellen bestimmte Internetdienste dar, bei denen ein Teilnehmer mittels eines Internet-Endgeräts eine Internetseite eines entsprechenden Internetservers oder Internet-Diensterechners aufruft, bestimmte Kriterien des gesuchten Teilnehmers, beispielsweise Zuname und Wohnort, in bestimmte Felder dieser Internetseite einträgt und diese Information, beispielsweise durch Anwählen einer bestimmten Schaltfläche, zum Telefonauskunftrechner zurücksendet. Als Antwort erhält er dann eine Internetseite mit einer Liste von Teilnehmern, jeweils mit Adressinformation und Rufnummer(n), welche die angegebenen Kriterien erfüllen. Falls der gesuchte Teilnehmer in der Liste enthalten ist, kann er die oder eine der Rufnummer(n) entnehmen. Falls der gesuchte Teilnehmer nicht in dieser Liste enthalten oder die Liste zu umfangreich ist, kann der Internetteilnehmer die genannten Kriterien modifizieren und erneut an den Internet-Diensterechner übermitteln, um eine neue Liste zu erhalten. Durch die Möglichkeit der Präsentation detaillierter Suchergebnisse auf einer Internetseite können Missverständnisse nahezu ausgeschlossen werden. Außerdem lässt sich eine Suche, bei entsprechend realisierter Suchsprache, auch mit zunächst groben oder unklaren Kriterien starten, die dann anhand der Suchergebnisse iterativ verfeinert oder konkretisiert werden. Ein eventuell anschließend gewünschter Verbindungsaufbau im Fernsprechnetz muss allerdings durch eine manuelle und damit unkomfortable und fehlerträchtige Eingabe der gefundenen Rufnummer in ein Fernsprechendgerät erfolgen.

Der Erfindung liegt die Aufgabe zugrunde, das zuletzt beschriebene Verfahren zur Rufnummernsuche mittels des Internets weiter zu verbessern.

Erfindungsgemäß wird diese Aufgabe durch ein Verfahren nach der Lehre des Anspruchs 1, einen Diensterechner nach der Lehre des Anspruchs 8 und einen Diensterechner nach der Lehre des Anspruchs 11, sowie ein Programmmodul nach der Lehre des Anspruchs 11 und ein Programmmodul nach der Lehre des Anspruchs 12 gelöst.

Grundgedanke der Erfindung ist es, das Internet mit dem Fernsprechnetz dahingehend zu verknüpfen, dass die Identifikation eines gesuchten Teilnehmers, die Ermittlung seiner Rufnummer und die Beauftragung zur Herstellung einer Verbindung durch den suchenden Teilnehmer ausschließlich im Internet, d.h. mittels eines Internet-Diensterechners und eines Internet-Endgeräts des suchenden Teilnehmers erfolgt. Anschließend wird der Auftrag vom Internet-Diensterechner zu einem Steuerrechner des Fernsprechnetzes weitergeleitet, der die Verbindungsherstellung im Fernsprechnetz veranlasst und überwacht.

Weitere vorteilhafte Ausgestaltungen der Erfindung sind den abhängigen Ansprüchen und der Beschreibung zu entnehmen.

Im folgenden wird die Erfindung unter Zuhilfenahme der Zeichnungen weiter erläutert:
- Fig. 1: zeigt schematisch ein Kommunikationsnetz, bestehend aus dem Internet und einem Fernsprechnetz, mit erfindungsgemäßen Diensterechnern,
- Fig.2: zeigt schematisch ein Kommunikationsnetz mit einer Einrichtung zur Internet-Telefonie,
- Fig.3: zeigt beispielhaft ein Ablaufdiagramm eines erfindungsgemäßen Verfahrens.

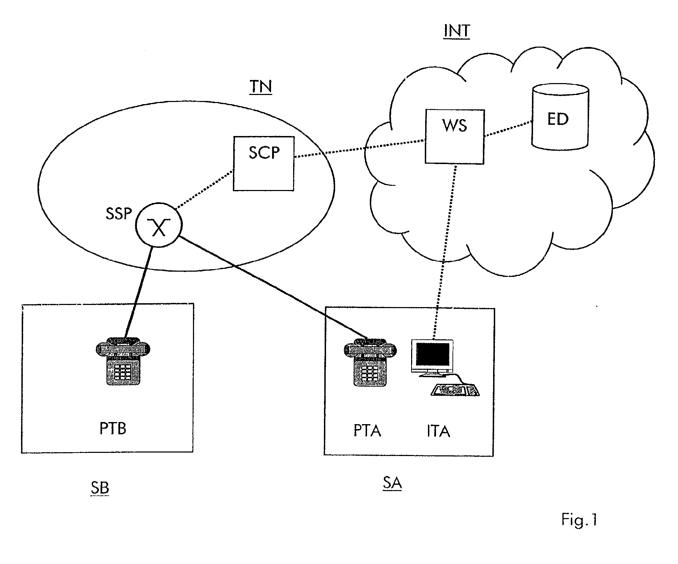

Fig.1 zeigt das Internet INT mit einem ersten Diensterechner WS und einer Datenbank ED, ein leitungsvermittelndes (Fernsprech-) Netz TN mit einem zweiten Diensterechner SCP und einer Vermittlungsstelle SSP, einen ersten Teilnehmer SA mit einem Internet-Endgerät ITA und einem ersten Fernsprechendgerät PTA und einen zweiten Teilnehmer SB mit einem zweiten Fernsprechendgerät PTB. Das erste Internet-Endgerät ITA ist mit dem ersten Diensterechner WS verbunden, der erste Diensterechner WS ist jeweils mit der Datenbank ED und dem zweiten Diensterechner SCP verbunden und der zweite Diensterechner SCP ist weiter mit der Vermittlungsstelle SSP verbunden. Die beschriebenen, gestrichelt eingezeichneten, Verbindungen stellen Daten- oder Signalisierungsverbindungen dar. Weiter ist fett eingezeichnet, eine Kommunikations- oder Sprachverbindung zwischen dem ersten Fernsprechendgerät PTA über die Vermittlungsstelle SSP und dem zweiten Fernsprechendgerät PTB dargestellt.

Bei dem ersten Diensterechner WS handelt es sich um einen sogenannten Internetserver oder WWW(World Wide Web)-Server, der mittels des sogenannten Internetprotokolls, im folgenden IP-Protokoll genannt, mit weiteren an das Internet angeschlossenen Internetservern oder Internet-Endgeräten kommuniziert. Als Internet-Endgerät ITA dient in der Regel ein PC (Personal Computer) mit bestimmten Programmmitteln, auch WWW-Browser genannt, der über ein Telefonmodem oder ein lokales Netz mit einem Internet-Zugangsserver verbunden ist. Zum Aufrufen einer Internetseite oder Web-Seite des ersten Diensterechners WS übermittelt das Internet-Endgerät ITA, nach Aktivierung der Verbindung mit dem Internet, häufig kurz Einloggen genannt, eine diese Internetseite identifizierende eindeutige Adresse, auch "unified ressource location" (URL) genannt, oder einen eindeutig damit verknüpften Namen. Eine Internetseite kann statische und/oder dynamische Information enthalten, wobei die dynamische Information beispielsweise abhängig von einer zuvor von dem Teilnehmer SA übermittelten Information sein kann. Weiter kann sie als sogenannte Eingabemaske dienen, die bestimmte Eingabefelder aufweist, welche der Teilnehmer mit Text ausfüllen kann. Die eingetragene Information (nicht die gesamte Internetseite) wird durch Quittierung, beispielsweise durch betätigen der "Return-Taste" oder durch anwählen oder anklicken einer dafür vorgesehenen Bildschirmschaltfläche, zurück an den ersten Diensterechner WS übermittelt.

Bei dem zweiten Diensterechner SCP handelt es sich um einen Steuerrechner des Fernsprechnetzes, beispielsweise einen sogenannten Service Control Point eines dem Fernsprechnetz überlagerten sogenannten Intelligenten Netzes. Das Intelligente Netz ermöglicht die Realisierung sogenannter IN-Dienste, die über die reine Gesprächsvermittlung hinausgehen. Der Vermittlungsstelle SSP stellt hier eine Vermittlungsstelle des Fernsprechnetzes TN dar, die um Schnittstellenfunktionen zur Kommunikation mit dem Diensterechner SCP mittels sogenannter INAP-Nachrichten (Intelligent Network Application Protocol) erweitert ist.

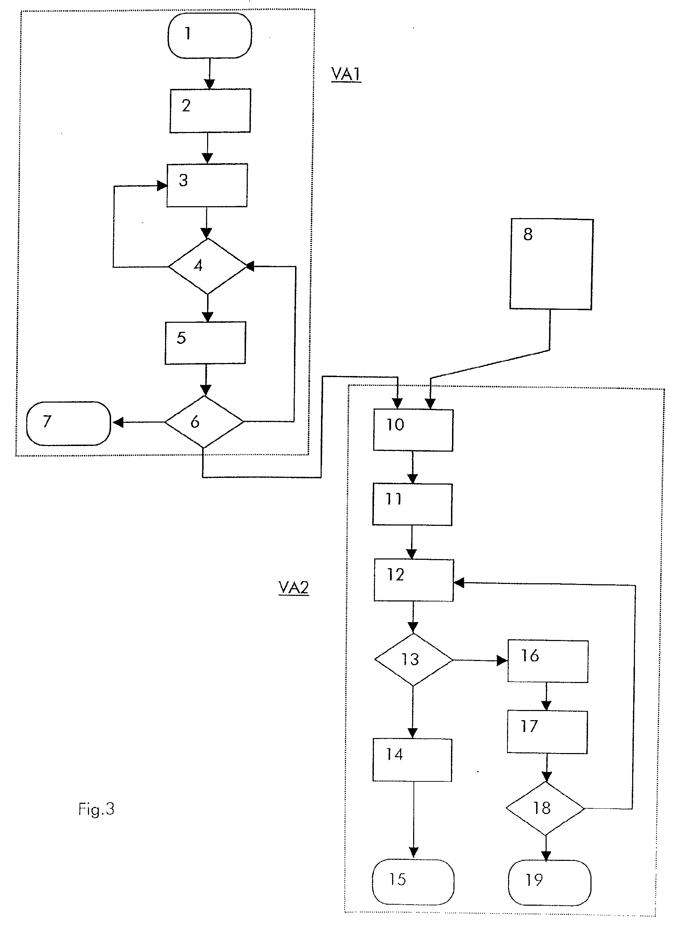

Der erste Diensterechner WS dient in einem ersten Verfahrensabschnitt eines zur Ausführung eines Dienstes zur Rufnummernsuche mit anschließendem automatischen Verbindungsaufbau ablaufenden erfindungsgemäßen Verfahrens als Rufnummern-Sucheinrichtung. In Zusammenarbeit des ersten Diensterechners WS und des ersten Teilnehmers SA wird eine zunächst unbekannte Rufnummer eines zweiten Teilnehmers SB ermittelt, wobei der erste Diensterechner WS gegebenenfalls auf in der Datenbank ED gespeicherte Daten zurückgreift. Dadurch, dass diese Kommunikation zwischen dem ersten Diensterechner WS und dem ersten Teilnehmer SA mittels Internetseiten geführt wird, kann das Verfahren zur Rufnummernsuche sehr komfortabel gestaltet werden. So kann der erste Teilnehmer SA auch mit recht unklaren Kriterien, beispielsweise mit einem nicht vollständig bekannten Namen eines gesuchten Teilnehmers beginnen und das Suchergebnis iterativ, also durch wiederholten Informationsaustausch mit dem ersten Diensterechner WS, bis zur Identifikation eines gesuchten Teilnehmers und damit zur Auffindung seiner/seinen Rufnummer(n) verbessern. Dieser erste Verfahrensabschnitt unterscheidet sie sich nicht grundsätzlich von einem eingangs beschriebenen Suchverfahren im Internet mittels Sucheinrichtungen, die beispielsweise von großen Telekommunikationsanbietern bereit gestellt werden. Der Unterschied zu den bekannten Verfahren liegt nun darin, dass nach abgeschlossenem ersten Verfahrensabschnitt, also nach erfolgreichem Auffinden einer Rufnummer, in einem zweiten Verfahrensabschnitt, auf Wunsch des ersten Teilnehmers SA, automatisch ein Verbindungsaufbau zwischen dem ersten Fernsprechendgerät PTA dieses Teilnehmers SA und dem zweiten Fernsprechendgerät PTB des (gesuchten) zweiten Teilnehmer SB durchgeführt wird. Dazu sind das Internet INT und das Fernsprechnetz TN miteinander verknüpft, indem eine Verbindung zwischen dem ersten Diensterechner WS und dem zweiten Diensterechner SCP vorgesehen ist. Diese Verbindung erlaubt es den Diensterechnern WS und SCP, die Steuerung des oben genannten Dienstes zu koordinieren. Ein detaillierter beispielhafter Ablauf eines erfindungsgemäßen Verfahrens wird unter Fig.3 beschrieben.

Die Funktionen des ersten Diensterechners WS und/oder des zweiten Diensterechners SCP können, beispielsweise in einem großen nationalen Fernsprechnetz, physikalisch jeweils auf mehrere Rechner eines Rechnerverbundes aufgeteilt werden. Die genannten Funktionen der Diensterechner WS und SCP können, beispielsweise in einem kleinen lokalen Fernsprechnetz, auch physikalisch in einem Rechner integriert werden, der dann sowohl eine Signalisierungsschnittstelle zu Einrichtungen des Fernsprechnetzes TN, insbesondere der Vermittlungsstelle SSP, als auch eine Internetschnittstelle aufweist.

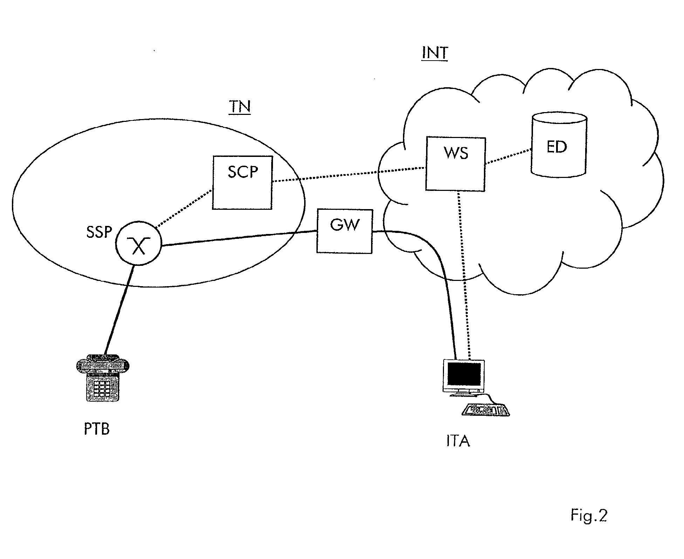

Fig.2 unterscheidet sich von Fig.1 dadurch, dass der erste Teilnehmer SA ausschließlich ein Internet-Endgerät ITA mit Sprachein- und -ausgabe aufweist. Zusätzlich ist ein Sprach-Gateway oder Voice-Gateway GW eingezeichnet. Statt der in Fig.1 gezeigten Verbindung zwischen dem ersten Fernsprechendgerät PTA über die Vermittlungsstelle SSP und dem zweiten Fernsprechendgerät PTB ist hier eine Verbindung zwischen dem ersten Fernsprechendgerät PTA über die Vermittlungsstelle SSP, das Sprach-Gateway GW und dem Internet-Endgerät ITA des ersten Teilnehmers SA eingezeichnet.

Das Sprach-Gateway dient der Protokollumsetzung vom Protokoll des Fernsprechnetzes TN zum Internetprotokoll INT und umgekehrt. So werden die vom ersten Internet-Endgerät ITA erzeugen sogenannten IP-Datenpakete beispielsweise in ATM-Datenpakete des Fernsprechnetzes TN umgesetzt und umgekehrt. Ein Sprach-Gateway ist beispielsweise in dem Dokument "Draft Recommendation G.799.1" der International Telecommunication Union, Sector Telecom (ITU-T) spezifiziert.

Das Internet-Endgerät ITA dient hier, zusätzlich zur Funktion als Dialogeinrichtung mit dem ersten Diensterechner WS als Endgerät des Fernsprechnetzes TN. Dazu findet beispielsweise mittels einer funktionalen Erweiterung des eingangs beschriebenen Browser eine Umwandlung der Sprachsignale des ersten Teilnehmers SA in geeignete IP-Datenpakete und umgekehrt eine Wandlung von IP-Datenpakete in analoge Sprachsignale statt, die über einen Lautsprecher am Internet-Endgerät ITA ausgegeben werden. Für den Fall, das der Teilnehmer beispielsweise mittels einer ISDN-Verbindung, zwei Verbindungen gleichzeitig mit seinem Internet-Endgerät ITA unterhalten kann, kann eine der Verbindungen davon für die Sprachkommunikation reserviert werden. Für den Fall, dass nur eine Verbindung aufgebaut werden kann, wird auf Tastendruck oder nach anwählen einer Bildschirmschaltfläche Sprachinformation des ersten Teilnehmers SA aufgenommen, in IP-Datenpakete umgewandelt und an das Sprach-Gateway übermittelt. Solche Techniken sind aus dem Stand der Technik bekannt und werden in zunehmende Maße realisiert. Das Dokument "ITU-T Recommendation H.323" der International Telecommunication Union beschreibt ein zur Sprachübertragung eingerichtetes Paketdaten-Kommunikationssystem mit seinen Komponenten und insbesondere die Endgeräte eines solchen Kommunikationssystems.

In Fig.3 ist beispielhaft ein Ablauf eines erfindungsgemäßen Verfahren zum Aufbau einer (Telekommunikations-) Verbindung zwischen dem ersten Teilnehmer SA und dem zweiten Teilnehmer SB in wesentlichen Funktionsoder Ablaufschritten 1 bis 19 dargestellt. Die einzelnen (Funktions-) Schritte stehen jeweils für eine einzelne Funktion oder eine Gruppe logisch zusammenhängender Funktionen. Dabei symbolisieren die gezeigten abgerundeten Rechtecke 1, 7, 15 und 19 Schritte, mit denen der beschriebene Dienst gestartet oder beendet wird. Die gezeigten Rauten 4, 6, 13 und 18 symbolisieren Schritte, nach denen je nach Bearbeitungsergebnis zu verschiedenen Schritten verzweigt wird. Die gezeigten Rechtecke 2, 3, 5, 8, 10, 11, 12, 14, 16 und 17 symbolisierten Schritte, nach deren Bearbeitung ohne Verzweigung ein eindeutiger nächster Schritt folgt. Die Schritte 1 bis 7 stellen einen ersten Verfahrensabschnitt VA1 des erfindungsgemäßen Verfahrens dar. Dabei kommunizieren der erste Diensterechner WS und der erste Teilnehmer SA zur Suche einer Rufnummer eines zweiten Teilnehmers SB. Die Schritte 10 bis 19 stellen den Ablauf eines zweiten Verfahrensabschnitts VA2 des erfindungsgemäßen Verfahrens dar. Dieser Verfahrensabschnitt VA2 dient der automatischen Verbindung zwischen dem ersten Teilnehmer SA und dem Teilnehmer SB, dessen Rufnummer im ersten Verfahrensabschnitt VA1 ermittelt wurde. Dieser zweite Verfahrensabschnitt VA2 kann direkt, ohne vorheriges Durchlaufen des ersten Verfahrensabschnitts VA1, mit Eingabe der Rufnummer gestartet werden. Im folgenden werden die einzelnen Schritte detailliert beschrieben. Zur Vereinfachung der Beschreibung werden die Teilnehmer SA und SB mit ihren Endgeräten PTA und ITA bzw. PTB gleichgesetzt. Insbesondere spielt es keine Rolle, ob der erste Teilnehmer über ein Internet-Endgerät ITA oder über ein Fernsprechendgerät PTA mit dem zweiten Teilnehmer SB verbunden wird:
- In Schritt 1 startet der erste Teilnehmer SA den Ablauf des genannten Verfahrens, indem er eine Internetseite des ersten Diensterechners WS anfordert.
- Im nächsten Schritt 2 sendet der erste Diensterechner WS die angeforderte Internetseite an den ersten Teilnehmer SA.
- Im nächsten Schritt 3 bearbeitet der erste Teilnehmer SA diese Internetseite durch Eintragen von Suchkriterien oder gegebenenfalls durch Modifizieren bereits eingetragener Suchkriterien und übermittelt diese Kriterien durch Quittierung, d.h. wie oben beschrieben durch anwählen oder anklicken einer zur Quittierung vorgesehenen Bildschirmschaltfläche (z. B. eine mit "OK" beschriftete Schaltfläche), zurück an den ersten Diensterechner WS.
- Im nächsten Schritt 4 prüft der erste Diensterechner WS die empfangenen Kriterien auf formale Korrektheit, beispielsweise ob bestimmte obligatorische Felder ausgefüllt wurden. Bei negativem Prüfergebnis generiert er eine Internetseite, die eine dem Prüfergebnis entsprechende Fehlermeldung und eine Aufforderung zur Eingabe von neuen Suchkriterien oder zur Modifikation der in Schritt 3 eingegebenen Suchkriterien enthält. Mit Übermittlung dieser Seite zum ersten Teilnehmer SA wird dann zurück nach Schritt 3 verzweigt. Bei positivem Prüfergebnis ermittelt der erste Diensterechner WS, gegebenenfalls in Zusammenarbeit mit der in Fig.1 gezeigten Datenbank ED, eine Ergebnisliste, die Teilnehmer enthält, auf welche die angegebenen Kriterien zutreffen und übermittelt eine diese Ergebnisliste enthaltende Internetseite an den ersten Teilnehmer SA.
- Im nächsten Schritt 5 bearbeitet der erste Teilnehmer SA diese Internetseite indem er aus der Ergebnisliste einen zweiten Teilnehmer SB auswählt, beispielsweise durch Markieren eines entsprechenden Bildschirmfeldes. Durch Quittierung, z.B. durch anklicken einer Schaltfläche "click-to-dial" übermittelt er einen entsprechenden Verbindungswunsch zum gewählten zweiten Teilnehmer SB an den ersten Diensterechner WS. Alternativ dazu übermittelt er neue oder modifizierte Suchkriterien oder den Wunsch zur Beendigung des Verfahrensablaufs.
- Im nächsten Schritt 6 verzweigt der erste Diensterechner WS, je nach übermittelter Information zu den Schritten 4, 7 oder 10. Enthält diese Information den Wunsch zur Beendigung, so wird zu Schritt 7 verzweigt. Enthält diese Information neue oder modifizierte Suchkriterien, so wird zur Prüfung dieser Kriterien zurück zu Schritt 4 verzweigt. Enthält diese Information einen Verbindungswunsch zum zweiten Teilnehmer SB, so wird zum Start des zweiten Verfahrensabschnitts VA2 zu Schritt 10 verzweigt.
- Mit Schritt 7 wird das beschriebene Verfahren beendet. Optional generiert der erste Diensterechner WS abschließend eine Internetseite mit einer entsprechenden Information und übermittelt diese Internetseite an den ersten Teilnehmer SA.
- Schritt 8 stellt einen zu den beschriebene Schritten 1 bis 7 alternativen Schritt dar, der gleichfalls zum Schritt 10 führt. In diesem Schritt 8 kann der erste Teilnehmer SA direkt einen Verbindungswunsch übermitteln, beispielsweise indem er eine Schaltfläche einer Internetseite anklickt, bei der eine fest programmierte Rufnummer eines Teilnehmers SB an den ersten Diensterechner WS übermittelt wird.
- Im Schritt 10 übermittelt der erste Diensterechner WS zur Ermittlung der Rufnummer des ersten Teilnehmers SA eine weitere Internetseite an diesen Teilnehmer SA. Diese Internetseite enthält beispielsweise den Text: "Bitte tragen Sie Ihre vollständige Rufnummer in das markierte Feld ein", und ein Feld zum Eintragen der Telefonnummer.
- Im nächsten Schritt 11 übermittelt der erste Teilnehmer SA durch Quittierung seine Telefonnummer an den ersten Diensterechner WS. Falls der Teilnehmer SA ein Internet-Endgerät ITA mit Sprachein- und - ausgabe aufweist, so übermittelt er statt der Rufnummer seine Internet- und die entsprechende Gateway-Adresse. In einer zu den Schritten 10 und 11 alternativen Variante ermittelt der erste Diensterechner WS die Rufnummer oder die Internet- und Gateway-Adresse des ersten Teilnehmers SA aus einer Datenbank ED, in der Rufnummern mit IP-Adressen verknüpft sind. Die Schritte 10 und 11 können alternativ auch im ersten Verfahrensabschnitt VA1 ausgeführt werden.
- Im nächsten Schritt 12 übermittelt der erste Diensterechner WS eine Aufforderung zur Verbindungsherstellung zusammen mit den Rufnummern des ersten Teilnehmers SA und des zweiten Teilnehmers SB an den zweiten Diensterechner SCP.
- im nächsten Schritt 13 wird in Zusammenarbeit der Vermittlungsstelle SSP und des zweiten Diensterechners SCP zunächst ermittelt, ob eine Verbindung hergestellt werden kann. Für den Fall, dass eine Verbindung hergestellt werden kann, wird nach Schritt 14 verzweigt. Für den Fall, dass keine Verbindung hergestellt werden kann, beispielsweise weil das Fernsprechendgerät PTB des zweiten Teilnehmers SB besetzt ist, wird nach Schritt 16 verzweigt, indem der zweite Diensterechner SCP eine entsprechende Nachricht an den ersten Diensterechner WS übermittelt.
- Im Schritt 14 wird der Verbindungsaufbau zwischen dem ersten Teilnehmer SA und dem zweiten Teilnehmer SB durchgeführt.
- Im nächsten Schritt 15 wird der zuvor beschriebene Verfahrensablauf beendet. Optional informiert der zweite Diensterechner SCP den ersten Diensterechner WS über den erfolgreichen Verbindungsaufbau, der daraufhin abschließend eine entsprechende Internetseite generiert, und diese Internetseite an den ersten Teilnehmer SA übermittelt.
- In Schritt 16 informiert der erste Diensterechner WS den ersten Teilnehmer SA mittels einer Internetseite darüber, dass keine Verbindung aufgebaut werden konnte und fordert ihn mittels dieser Internetseite weiter auf, zwischen einer Beendigung des Verfahrensablaufs und einem erneuten Versuch eines Verbindungsaufbaus, nach einer vom ersten Teilnehmer SA festgelegten oder nach einer fest vorgegebenen Zeit, zu wählen.
- Im nächsten Schritt 17 bearbeitet der erste Teilnehmer SA die übermittelte Internetseite beispielsweise durch Anwählen entsprechender Schaltflächen. Anschließend übermittelt er diese Information durch Quittieren zum ersten Diensterechner WS.
- Im nächsten Schritt 18 übermittelt der erste Diensterechner WS für den Fall, dass ein erneuter Versuch zu einem Verbindungsaufbau gewünscht wird, erneut eine entsprechende Aufforderung zusammen mit den Rufnummern beider Teilnehmer an den zweiten Diensterechner SCP und verzweigt damit zurück zu Schritt 12. Für den Fall, das die Beendigung des Verfahrensablaufs gewünscht wird, wird zum Schritt 19 verzweigt.
- Mit Schritt 19 wird der zuvor beschriebene Verfahrensablauf beendet. Optional generiert der erste Diensterechner WS abschließend eine Internetseite mit einer entsprechenden Information und übermittelt diese Internetseite an den ersten Teilnehmer SA.

In einer Erweiterung des erfindungsgemäßen Verfahrens wird dem ersten Teilnehmer angeboten, in Schritt 5 einen gleichzeitigen Verbindungswunsch zu mehreren Teilnehmer einzutragen.

In einer weiteren vorteilhaften Erweiterung ist in der Datenbank ED für eingetragene Teilnehmer jeweils eine Information gespeichert, die beinhaltet, ob der entsprechende Teilnehmer die anfallenden Gesprächsgebühren teilweise oder ganz übernehmen will. Im Normalfall, für den keine Information gespeichert werden muss, übernimmt der anrufende Teilnehmer die Gebühren. Der erste Diensterechner WS informiert im Zusammenhang mit der Übermittlung der Rufnummern den zweiten Diensterechner SCP darüber, wie die Vergebührung vorgenommen werden soll. Der zweite Diensterechner SCP veranlasst eine entsprechende Vergebührung im Fernsprechnetz TN. Dies ist beispielsweise für Unternehmen vorteilhaft, welche die Gesprächsgebühren beispielsweise für Beratungsgebühren grundsätzlich übernehmen wollen. Es ist auch denkbar, dass ein eingetragener Teilnehmer nicht grundsätzlich sämtliche Gebühren übernehmen will, sondern beispielsweise nur Gebühren von Inlandsgesprächen oder nur Gebühren von Gesprächen, die zu bestimmten Tageszeiten geführt werden. Die entsprechende Information ist ebenfalls in der Datenbank gespeichert.

## Patentansprüche

1. Verfahren zum Aufbau einer Telekommunikationsverbindung zwischen einem ersten Teilnehmer (SA) und einem zweiten Teilnehmer (SB) eines Telekommunikationsnetzes (TN), wobei mindestens der erste Teilnehmer (SA) ein Internet-Endgerät (ITA) aufweist, mit den folgenden Schritten:
• der erste Teilnehmer (SA) sendet von seinem Internet-Endgerät (ITA) aus an einen ersten Diensterechner (WS) zur Durchführung von Diensten für Internetbenutzer eine Information, dass er eine Telekommunikationsverbindung mit dem zweiten Teilnehmer (SB) wünscht,
• der erste Diensterechner (WS) sendet eine Nachricht an einen zweiten Diensterechner (SCP) zur Durchführung von Diensten in einem Telekommunikationsnetz (TN),welche die Rufnummern der genannten Teilnehmer (SA, SB) und die Aufforderung zur Herstellung einer (Telekommunikations-) Verbindung zwischen den genannten Teilnehmern (SA, SB) enthält und
• der zweite Diensterechner (SCP) veranlasst im Telekommunikationsnetz (TN) einen Verbindungsaufbau zwischen den genannten Teilnehmern (SA, SB).

2. Verfahren nach Anspruch 1, **dadurch gekennzeichnet, dass** die Rufnummer des zweiten Teilnehmers (SB) durch folgende Schritte ermittelt wird:
• Der erste Teilnehmer (SA) ruft eine Internetseite des ersten Diensterechners (WS) auf zur Eingabe von Suchkriterien in dafür vorgesehene Eingabefelder,
• Der erste Teilnehmer (SA) gibt Suchkriterien des gesuchten zweiten Teilnehmers ein und übermittelt diese Kriterien durch Quittieren und
• der erste Diensterechner (WS) identifiziert den zweiten Teilnehmer (SB) und ermittelt eine Rufnummer des zweiten Teilnehmers (SB).

3. Verfahren nach Anspruch 1, **dadurch gekennzeichnet, dass** der erste Diensterechner (WS) die Rufnummer des ersten Teilnehmers (SA) durch eine Abfrage bei diesem Teilnehmer (SA) mittels einer Internetseite erhält

4. Verfahren nach Anspruch 1, **dadurch gekennzeichnet, dass** der erste Diensterechner (WS) die Rufnummer des ersten Teilnehmers (SA) durch eine Abfrage einer Interneteinrichtung (ED) erhält.

5. Verfahren nach Anspruch 1, **dadurch gekennzeichnet, dass** der Verbindungsaufbau zwischen den Teilnehmern (SA, SB) über das Internet-Endgerät (ITA) des ersten Teilnehmers erfolgt, wobei die Gesprächsdaten zur Protokollumsetzung über ein Sprach-Gateway (GW) zwischen dem Fernsprechnetz (TN) und dem Internet (INT) geleitet werden.

6. Verfahren nach Anspruch 1, **dadurch gekennzeichnet, dass** falls die gewünschte Verbindung nicht aufgebaut werden kann, beispielsweise weil das Fernsprechendgerät (PTB) des zweiten Teilnehmers (SB) besetzt ist, der zweite Diensterechner (SCP) über den ersten Diensterechner (WS) eine entsprechende Information an den ersten Teilnehmer (SA) übermittelt.

7. Verfahren nach Anspruch 1, **dadurch gekennzeichnet, dass** eine flexible Vergebührung der Fernsprechverbindungen dergestalt durchgeführt wird, dass der erste Diensterechner (WS) dem zweiten Diensterechner (SCP) mitteilt, welche Anteile der anfallenden Gebühren dem ersten Teilnehmer (SA) bzw. dem zweiten Teilnehmer (SB) angerechnet werden sollen.

8. Diensterechner (WS) zur Durchführung von Diensten für Internetbenutzer, mit Mitteln zur Durchführung der folgenden Schritte:
• Ermitteln der Rufnummer eines ersten Teilnehmers (SA),
• Ermitteln der Rufnummer eines zweiten Teilnehmers (SB) und
• Senden einer Nachricht an einen zweiten Diensterechner (SCP) zur Durchführung von Diensten in einem Telekommunikationsnetz (TN),welche die Rufnummern der genannten Teilnehmer (SA, SB) und eine Aufforderung zur Herstellung einer Verbindung zwischen den genannten Teilnehmern (SA, SB) enthält.

9. Diensterechner (WS) nach Anspruch 8, **dadurch gekennzeichnet, dass** er zur Ermittlung der Rufnummer des zweiten Teilnehmers (SB) Empfangsmittel zum Empfang einer dazu vom ersten Teilnehmer (SA) übermittelten Rufnummer enthält.

10. Diensterechner (WS) nach Anspruch 8, **dadurch gekennzeichnet, dass** er zur Ermittlung der Rufnummer des zweiten Teilnehmers (SB) weitere Mittel zur Durchführung folgender Schritte enthält:
• Senden einer Internetseite zur Eingabe von Suchkriterien in dafür vorgesehene Eingabefelder,
• Empfang der Suchkriterien und
• Identifizierung des zweiten Teilnehmers (SB) anhand der Suchkriterien und Ermittlung einer Rufnummer des zweiten Teilnehmers (SB).

11. Diensterechner (SCP) zur Durchführung von Diensten in einem Telekommunikationsnetz (TN), mit Mitteln zur Durchführung der folgenden Schritte:
• Empfang einer Nachricht eines ersten Diensterechners (WS) zur Durchführung von Diensten für Internetbenutzer, welche die Rufnummern von Teilnehmern (SA, SB) und die Aufforderung zur Herstellung einer Verbindung zwischen den genannten Teilnehmern (SA, SB) enthält und
• Kommunikation mit weiteren Einrichtungen des Telekommunikationsnetzes (TN) zur Steuerung des Verbindungsaufbaus zwischen den genannten Teilnehmern (SA, SB).

12. Programmmodul zur Verwendung in einem Diensterechner (WS) zur Durchführung von Diensten für Internetbenutzer mit Programmmitteln zur Steuerung der folgenden Schritte:
• Ermitteln der Rufnummer eines ersten Teilnehmers (SA),
• Ermitteln der Rufnummer eines zweiten Teilnehmers (SB) und
• Senden einer Nachricht an einen zweiten Diensterechner (SCP) zur Durchführung von Diensten in einem Telekommunikationsnetz (TN), welche die Rufnummern der genannten Teilnehmer (SA, SB) und eine Aufforderung zur Herstellung einer Verbindung zwischen den genannten Teilnehmern (SA, SB) enthält.

13. Programmmodul zur Verwendung in einem Diensterechner (SCP) zur Durchführung von Diensten in einem Telekommunikationsnetz (TN) mit Programmmitteln zur Steuerung der folgenden Schritte:
• Empfang einer Nachricht eines ersten Diensterechner (WS) zur Durchführung von Diensten für Internetbenutzer, welche die Rufnummern von Teilnehmern (SA, SB) und eine Aufforderung zur Herstellung einer Verbindung zwischen den genannten Teilnehmern (SA, SB) enthält und
• Kommunikation mit weiteren Einrichtungen des Telekommunikationsnetzes (TN) zur Steuerung des Verbindungsaufbaus zwischen dem genannten Teilnehmern (SA, SB)
